Europäisches Patentamt

European Patent Office

Office européen des brevets

(11) Veröffentlichungsnummer: **0 455 044 A2**

## (12) EUROPÄISCHE PATENTANMELDUNG

(21) Anmeldenummer: 91106099.4

(22) Anmeldetag: 17.04.91

(30) Priorität: 04.05.90 DE 9005097 U

(43) Veröffentlichungstag der Anmeldung:
06.11.91 Patentblatt 91/45

(84) Benannte Vertragsstaaten:
AT DE FR GB IT NL SE

(51) Int. Cl.⁵: **B60H 1/26**, B60H 3/06,
A61G 3/00

(71) Anmelder: **Binz GmbH & Co**
**Postfach 1120**
**Zollstrasse 2 D-7073 Lorch(DE)**

(72) Erfinder: **Der Erfinder hat auf seine Nennung
verzichtet**

(74) Vertreter: **Rotermund, Hanns-Jörg, Dipl.-Phys.
et al
MANITZ, FINSTERWALD & ROTERMUND
Seelbergstrasse 23/25
W-7000 Stuttgart 50(DE)**

(54) **Rettungs- bzw. Krankentransportwagen od.dgl. mit belüftbarem, insbesondere zwangsbelüftbarem Innenraum.**

(57) Im Belüftungssystem des Krankentransportraumes (4) wird die Luft durch eine Filtervorrichtung (7) geleitet, die Verschmutzungen mit geringer Partikelgröße zurückzuhalten vermag.

EP 0 455 044 A2

Die Erfindung betrifft einen Rettungs- bzw. Krankentransportwagen od.dgl. mit belüftbarem, insbesondere zwangsbelüftbarem Innenraum.

Um im Innenraum von Rettungs- bzw. Krankentransportwagen od.dgl., z.B. auch Notarztwagen, ein angemessenes Klima aufrechtzuerhalten, sind derartige Fahrzeuge mit wirksamen Belüftungssystemen ausgestattet, die mit der Fahrzeugheizung kombiniert sein können. In der Regel sind die entsprechenden Systeme für die Fahrerkabine und die Krankentransportkabine getrennt bzw. mit getrennten Belüftungswegen ausgebildet. Auf diese Weise soll eine Verschleppung von Krankheitskeimen von der Krankentransportkabine in die Fahrerkabine und umgekehrt vermieden werden.

Dagegen sind keinerlei Maßnahmen vorgesehen, um ein Einschleppen von Verschmutzungen von außen zu vermeiden.

Zwar ist es grundsätzlich bekannt, die Zwangsbelüftungssysteme von Personenkraftwagen mit Filtervorrichtungen für die dem Innenraum zugeführte Frischluft auszurüsten. Jedoch haben sich derartige Systeme bisher nicht durchgesetzt. Dies dürfte unter anderem darauf beruhen, daß solche Filtervorrichtungen im Hinblick auf die bei Personenwagen oft geöffneten Fenster und Hub- bzw. Schiebedächer, durch die Verschmutzungen ungehindert in den Innenraum eintreten können, wenig sinnvoll erscheinen. Im übrigen wird durch die Filtervorrichtungen die Wirksamkeit der Zwangsbelüftungssysteme vermindert.

Aufgabe der Erfindung ist es nun, einen Rettungs- bzw. Krankentransportwagen zu schaffen, dessen Innenraum besonders gut gegen von außen eindringende Verschmutzungen oder Krankheitskeime gesichert ist.

Diese Aufgabe wird erfindungsgemäß gelöst durch eine Filtervorrichtung entsprechend dem kennzeichnenden Teil des Anspruches 1.

Bei der Erfindung wird die Tatsache ausgenutzt, daß die Krankentransportkabinenvon Rettungs- bzw. Krankentransportfahrzeugen praktisch ausschließlich über Zwangsbelüftungssysteme mit Ventilatoren od.dgl. mit Frischluft versorgt werden, denn nur auf diese Weise läßt sich im Innenraum hinreichende Zugfreiheit gewährleisten; geöffnete Fenster oder Dachluken werden dagegen nur ausnahmsweise zur Belüftung eingesetzt. Aus diesem Grunde sind die Zwangsbelüftungssysteme vergleichsweise groß bemessen, um unter allen Umständen die gewünschte Luftzufuhr ermöglichen zu können. Damit wird aber auch die Anordnung einer Filtervorrichtung ohne nennenswerte Einschränkung der Belüftbarkeit des Fahrzeuginnenraumes ermöglicht.

Da die Filtermedien so ausgestaltet sind, daß Pollen u.dgl. sowie Ruß und Viren vollständig bzw. in hohem Maße zurückgehalten werden, wird der Reinheitsgrad der Luft im Fahrzeuginnenraum wesentlich verbessert und der Transport von Allergikern erleichtert.

Außerdem kann gemäß der Erfindung vorgesehen sein, daß auch bei einem eventuellen Umluftbetrieb einer fahrzeugseitigen Belüftungs- bzw. Heizvorrichtung, d.h. wenn die aus dem Innenraum an einer Stelle abgeführte Luft dem Innenraum an anderer Stelle - gegebenenfalls nach Erwärmung - erneut zugeführt wird, die Luft über die Filtervorrichtung geführt wird. Auf diese Weise kann eine fortlaufende Reinigung bzw. Reinhaltung der Innenraumluft gewährleistet werden. Dies ist unter anderem deshalb vorteilhft, weil bei der Aufnahme des zu transportierenden Kranken bzw. Verletzten größere Mengen von Schmutz oder Staub in den Fahrzeuginnenraum gelangen können.

Zweckmäßigerweise ist die Filtervorrichtung mit einer Anzeige für den Verschmutzungsgrad des Filtermaterials ausgerüstet, um dieses einerseits optimal auszunutzen und andererseits zu verhindern, daß bei einer eventuellen Überladung des Filtermaterials mit Verschmutzungen größere Mengen zuvor zurückgehaltener Partikel und Krankheitskeime schlagartig freigesetzt werden (sogenannter "Durchbruch" des Filters).

Gegebenenfalls kann dazu das Filtermaterial einsehbar bzw. hinter einem Sichtfenster angeordnet sein, um den Grad der Verschmutzung jederzeit an der Verfärbung des Filtermaterials erkennen zu können.

Stattdessen ist es auch möglich, Meßinstrumente anzuordnen, die auf die Verfärbung des Filtermaterials reagieren.

Darüber hinaus kann auch die Druckdifferenz zwischen den Luftdrücken auf der Eingangsseite und der Ausgangsseite der Filtervorrichtung gemessen werden. Diese Druckdifferenz steigt mit zunehmender Verschmutzung an. Bei Erreichen eines Schwellwertes erfolgt dann ein Filteraustausch.

Im übrigen wird hinsichtlich bevorzugter Merkmale der Erfindung auf die Ansprüche verwiesen.

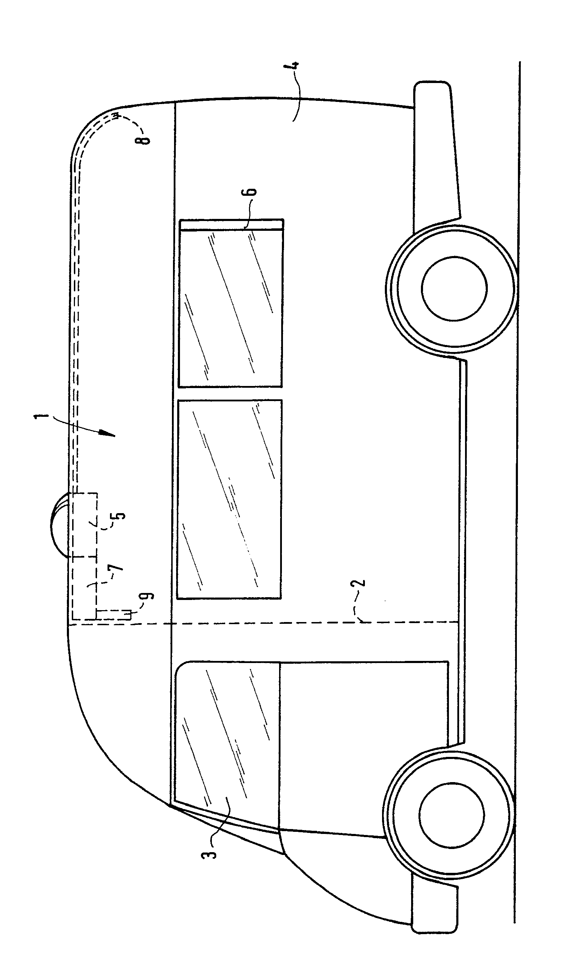

Nachfolgend wird ein Ausführungsbeispiels der Erfindung anhand der Zeichnung erläutert.

Dabei zeigt die einzige Figur eine schematisierte Seitenansicht eines Rettungsfahrzeuges, welches gemäß der Erfindung ausgestattet ist.

Der Innenraum des dargestellten Rettungsfahrzeuges 1 ist in üblicher Weise durch eine Trennwand 2 in eine Fahrerkabine 3 und einen Krankentransportraum 4 unterteilt. Die beiden Kabinen 3 und 4 besitzen getrennte Belüftungssysteme bzw. ein System mit getrennten Belüftungswegen.

Der Krankentransportkabine 4 wird beispielsweise Frischluft über eine Gebläsevorrichtung 5 zugeführt, deren Saugseite über eine dachseitige Belüftungsöffnung mit der Fahrzeugaußenseite verbunden ist. Die Gebläsevorrichtung 5 kann in grundsätzlich bekannter Weise mit einer Heizung kombiniert sein.

Entsprechend der zugeführten Frischluftmenge wird Luft aus der Krankentransportkabine 4 durch Entlüftungsöffnungen 6, beispielsweise Schlitze in den Seitenwänden des Fahrzeuges, nach außen abgeführt.

Abweichend von der dargestellten Anordnung kann auch an den Entlüftungsöffnungen 6 ein Gebläse angeordnet sein.

In diesem Falle kann die Gebläsevorrichtung 5 an den Belüftungsöffnungen entfallen.

Wichtig ist, daß die von außen der Krankentransportkabine 4 zugeführte Frischluft über eine Filtervorrichtung 7 geführt wird, deren Filtermaterial zweckmäßigerweise so ausgewählt bzw. angeordnet ist, daß auch Partikel, deren Durchmesser kleiner als 5 Mikrometer ist, noch zu einem wesentlichen Anteil zurückgehalten werden können. Damit werden nicht nur die verhältnismäßig großen Pollen und sonstigen Schmutzpartikel der Außenluft zurückgehalten (hier liegt die Partikelgröße in der Regel oberhalb von 5 Mikrometern). Vielmehr werden auch sehr feine Ruß- und Staubteilchen sowie Krankheitskeime oder Viren weitestgehend ausgefiltert. Die zugeführte Frischluft besitzt also einen hohen Reinheitsgrad.

Durch entsprechende Filtermedien lassen sich gegebenenfalls auch Geruchsstoffe, auch in Gasform, zurückhalten.

Die Gebläsevorrichtung 5 kann auch auf Umlaufbetrieb geschaltet werden, bei dem die von außen nach innen führenden Belüftungsöffnungen geschlossen und die Innenraumluft lediglich umgewälzt bzw. fortlaufend über die mit der Gebläsevorrichtung 5 kombinierte Heizung zur Erwärmung geführt wird. Beispielsweise kann dabei die Innenraumluft von innenraumseitigen Ansaugöffnungen 8 zu innenraumseitigen Ausblasöffnungen 9 geführt werden.

Auch in diesem Falle ist erfindungsgemäß vorgesehen, daß die Luft über die Filtervorrichtung 7 geführt wird. Auf diese Weise kann eine fortlaufende Reinigung der Luft ermöglicht werden.

Nach der Erfindung kann also das Belüftungssystem für den Krankentransportraum 4 wahlweise zwischen Zuluftbetrieb und Umluftbetrieb umgeschaltet werden. In beiden Betriebszuständen wird die Luft durch die Filtervorrichtung 7 geführt, die Verschmutzungen mit geringer Partikelgröße zurückzuhalten vermag. Beim Zuluftbetrieb wird dann die in den Innenraum 4 eingeleitete Frischluft und beim Umluftbetrieb die umgewälzte Innenraumluft ständig von Schadstoffen befreit.

## Patentansprüche

1.  Rettungs- bzw. Krankentransportwagen mit belüftbarem, insbesondere zwangsbelüftetem Innenraum (4), gekennzeichnet durch eine Filtervorrichtung (7) für die dem Innenraum (4) zugeführte Frischluft, wobei die Filtervorrichtung als Partikelfilter ausgebildet ist, welches Schwebestoffe bzw. Aerosole mit einer Partikelgröße unterhalb von 5 Mikrometern noch zu einem wesentlichen Anteil zurückzuhalten vermag.

2.  Rettungs- bzw. Krankentransportwagen nach Anspruch 1, dadurch gekennzeichnet, daß die Filtervorrichtung (7) mit einer Anzeige für den Verschmutzungsgrad ausgerüstet ist.

3.  Rettungs- bzw. Krankentransportwagen nach einem der Ansprüche 1 oder 2, dadurch gekennzeichnet, daß das Filtermaterial einsehbar bzw. hinter einem Sichtfenster angeordnet ist.

4.  Rettungs- bzw. Krankentransportwagen mit belüftbarem, insbesondere zwangsbelüftbarem Innenraum (4) mit einer Filtervorrichtung (7) für die dem Innenraum (4) zugeführte Frischluft, insbesondere nach einem der Ansprüche 1 bis 3, dadurch gekennzeichnet, daß eine auf Umluftbetrieb schaltbare Belüftungs- bzw. Heizvorrichtung (5) angeordnet und die Filtervorrichtung (7) in den Weg der umgewälzten Luft einschaltbar ist.

EP 0 455 044 A2